# EUROPÄISCHE PATENTANMELDUNG

(11) **EP 1 233 318 A1**
(43) Veröffentlichungstag der Anmeldung: **21.08.2002**
(21) Anmeldenummer: 01810160.0
(22) Anmeldetag: 16.02.2001
(51) Int. Cl.: G05B 19/418

(54) **Softwarekomponente für ein verteiltes Kontrollsystem**

(71) Anmelder: ABB RESEARCH LTD., 8050 Zürich (CH)
(72) Erfinder: Preiss, Otto, 5079 Zeihen (CH); Eschermann, Maren, 5417 Untersiggenthal (CH); Naedele, Martin, 8048 Zürich (CH)
(74) Vertreter: ABB Patent Attorneys

(57) **Zusammenfassung**

Die Erfindung ist gerichtet auf eine Softwarekomponente (1, 2, 3) für ein verteiltes Kontrollsystem mit Anwendungseinheiten (4, 5), welche einen oder mehrere logischen Funktionsknoten aufweisen, die jeweils eine einzelne Kontrollsystem-Funktion in den Anwendungseinheiten definieren und zum Erreichen einer gewünschten Funktionalität des Kontrollsystems miteinander interagieren oder interagieren können; mit einem Funktionsmittel zur Implementation eines logischen Funktionsknotens; einem Verhandlungsmittel zum Empfangen einer Verbindungsanweisung bezüglich einer aufzunehmenden Verbindung mit zumindest einem weiteren Funktionsknoten und zum Vereinbaren möglicher, verwendbarer Verbindungsparameter zwischen dem Funktionsknoten und dem zumindest einen weiteren Funktionsknoten während einer Kompositionsphase des Kontrollsystems; und einem Verbindungsmittel zum Einstellen der vereinbarten Verbindungsparameter zwischen den Funktionsmitteln und zur Datenübertragung zwischen den verbundenen Funktionsmitteln während einer Laufzeit des Kontrollsystems.

## Beschreibung

### Technisches Gebiet

Die Erfindung betrifft eine Softwarekomponente für Anwendungseinheiten in Kontrollsystemen, beispielsweise der Anlagenleittechnik, ein solche Softwarekomponenten verwendendes Kontrollsystem, ein Verfahren und ein Computerprogrammprodukt zum Entwerfen eines Kontrollsystems.

### Stand der Technik

Systeme der Anlagenleittechnik, wie sie beispielsweise in Energieerzeugungsanlagen und Verteilstationen, Hochund Mittelspannungsschaltanlagen eingesetzt werden, bestehen in der Regel aus einem System miteinander vernetzter Komponenten, welche die gesamte Funktionalität des Systems bereitstellen. Diese Komponenten werden in der vorliegenden Erfindung als Anwendungseinheiten bezeichnet.

Eine Anwendungseinheit kann ein Gerät sein, beispielsweise ein Steuer- oder Meßgerät, oder ein Programm, welches auf einer Datenverarbeitungsanlage abläuft. Anwendungseinheiten werden auch als "intelligent electronic devices" bezeichnet. Solche Systeme der Stationsleittechnik weisen einen hohen Vernetzungsgrad auf, da die Anwendungseinheiten miteinander interagieren müssen. Die Software-Funktionalität der Anwendungseinheit kann hierbei logisch in elementare Funktionsknoten untergliedert werden, welche jeweils eine einzelne Funktion der Anwendungseinheit definieren. Beispiele für solche Funktionsknoten können Schaltersteuerungsfunktionen, Schutzfunktionen (z.B. gegen Überstrom), Archivierungsfunktionen für Meßwerte oder andere Systembedingungen, etc. sein, jedoch auch die in Proxies abgebildeten Prozessschnittstellen der physikalischen Ausrüstung. Um die gewünschte Gesamtfunktionalität einer Leitstation zu erreichen, werden diese Funktionsknoten miteinander logisch-funktionell verbunden. So kann beispielsweise eine Schaltersteuerung verbunden sein mit einer diese schaltenden Schalterrepräsentation eines Leitstellenprogramms, oder ein Temperatursensor kann verbunden sein mit einer Temperaturanzeigen-Komponente. In modernen Anlagenleittechniksystemen werden praktisch ausschließlich datenverabeitungsbasierte Geräte eingesetzt. Die auf diesen Geräten implementierten Funktionsknoten bestehen aus Programmobjekten, die auf einem Mikrocontroller oder einer ähnlichen Einheit ablaufen, und welche die eigentliche Ansteuerung von physikalischen Elementen beziehungsweise die Darstellung von Informationen oder Benutzerschnittstellen bewirken.

In diesem Sinne beinhaltet also die Definition eines Funktionsknotens nicht ein physikalisches Element (sofern dies überhaupt vorhanden ist), sondern eine dieses steuernde Software.

Intelligente elektronische Geräte der Anlagenleittechnik beinhalten zumeist eine ganze Reihe von solchen Funktionsknoten. Das gleiche gilt für die zur Realisierung von Schaltzentralen oder ähnlichen verwendeten Datenverarbeitungsanlagen, auf denen zahlreiche Softwareobjekte ablaufen, die eine Benutzerschnittstelle, häufig in graphischer Art, implementieren.

Die verschiedenen Anwendungseinheiten eines Systems werden über physikalische Verbindungen, wie beispielsweise Netzwerke oder Datenbusse, miteinander verbunden, um über diese miteinander kommunizieren zu können. Zwischen den logischen Funktionsknoten auf diesen Anwendungseinheiten werden logische Verbindungen geknüpft, die über die physikalischen Verbindungen hergestellt werden.

Zur Übertragung von Daten zwischen den Anwendungseinheiten beziehungsweise den auf ihnen implementierten Funktionsknoten werden Verbindungsparameter berücksichtigt, welche die miteinander kommunizierenden Funktionsknoten übereinstimmend verstehen können und welche entweder vorab festgelegt werden müssen oder welche in einer Verhandlungsphase zwischen den Funktionsknoten vereinbart werden können. Verbindungsparameter können beispielsweise sein Codierung und Geschwindigkeit der übermittelten Daten, aber auch die Bedeutung der Daten zu ihrer korrekten Interpretation.

Um das komplexe Zusammenspiel der verschiedenen Anwendungseinheiten auch herstellerübergreifend zu ermöglichen oder weiter zu verbessern, erscheint es sinnvoll, eine Standardisierung der Funktionsknoten hinsichtlich ihrer Funktionalität sowie ihrer Kommunikationsfähigkeit vorzunehmen. Dieser Aufgabe ist die IEC mit Entwicklung des Standards IEC 61850 nachgekommen. Dieser Standard beschreibt den logischen und physikalischen Aufbau von Anwendungseinheiten speziell in der Stationsleittechnik und stellt eine Gliederung in funktionelle Komponenten bereit, um die Probleme des Datenaustausches und der Kommunikation zwischen Anwendungseinheiten zu lösen.

Im in Teil 7 der Spezifikation festgelegten Datenmodell interagiert ein intelligentes elektronisches Gerät (gleichbedeutend mit einer Anwendungseinheit im Sinne der vorliegenden Erfindung) über ein ACSI (Abtract Communication Service Interface) mit anderen Anwendungseinheiten. Das intelligente elektronische Gerät kann unterteilt werden in mehrere Server, die ihrerseits logische Geräte enthalten. Diese logischen Geräte wiederum können jeweils ein oder mehrere sogenannte logische Knoten aufweisen, welche von ihrem Konzept her den Funktionsknoten der vorliegenden Erfindung entsprechen.

Logische Knoten sind das hervorstechende Konzept im Standard der IEC. Sie stellen die kleinsten funktionellen Einheiten dar, die überhaupt logisch unterscheidbar implementiert werden können. Übliche Funktionen einer Leitstation bestehen aus zumindest drei logischen Knoten, einem logischen Knoten für die Kernfunktionalität, einem für die Prozeßschnittstelle und einem für den HMI (human machine interface)-bezogenen Teil. Während durch die IEC 61850 Funktionalität, Kommunikation und Kompatibilität von Anwendungseinheiten voraussichtlich sichergestellt werden können, bleibt die konkrete Implementation des in der IEC 61850 vorgeschlagenen Modells den einzelnen Anbietern von Anwendungseinheiten der Stationsleittechnik vorbehalten.

Solche verteilten Kontrollsysteme, wie beispielsweise Unterstationsautomatisierungssysteme, werden im Stand der Technik entweder mit einer prozeduralen oder mit einem objektorientiert basierten Ansatz durch Softwareingenieure programmiert. Hierbei werden verteilte Substationsautomatisierungsanwendungen aufgebaut, indem proprietäre individuelle Programmobjekte erstellt oder im Falle von Bibliotheken wiederverwendet werden.

Jede Anwendungseinheit enthält dabei eine Art von Datenbank. Im Falle von Geräten nach dem Standard IEC 61850 verfügt beispielsweise jeder logische Knoten über eine logische Datenbank. Der Datenaustausch zwischen den Programmobjekten, beispielsweise solchen zur Implementierung von Funktionsknoten, wird durch Übergeben von individuellen Signalen/Variablen an diese Datenbanken erreicht. Es handelt sich also um einen datenflußzentrierten Ansatz, der die Konfiguration eines verteilten Datenbanksystems erfordert, welches hinsichtlich der Datenkommunikationseinrichtungen zwischen seinen verteilten Komponenten konsistent sein muß. Eine solche Verteilung der Funktionalität führt jedoch jedenfalls zu einem niedrigen Abstraktionsniveau bei der Implementation. Dies hat verschiedene Nachteile:

Die Abstraktionsmodelle und damit ihre Abbildung auf das Kommunikationssystem unterscheiden sich zwischen Anwendungseinheiten unterschiedlicher Hersteller und ebenso selbst zwischen Produktfamilien eines einzelnen Herstellers, was zu einem hohen Komplexitätsgrad bei der Programmierung eines Systems führt.

Die konsistente Konfiguration der verschiedenen Datenbanken gemeinsam mit dem Kommunikationssystem ist zeitaufwendig und fehleranfällig, was die Qualität verschlechtert und die Kosten erhöhen kann.

Darüber hinaus wird jedes so erstellte System in seinem Aufbau einzigartig und ist daher mangels Standardisierung schlecht zu prüfen und schwierig zu warten, was wiederum die Qualität senkt und die Kosten erhöht.

Auch eine Herstellerunabhängigkeit ist, trotz der Modellierung gemäß dem Standard IEC 61850 während der Programmierphase schwierig zu erreichen, was wiederum zu höheren Kosten führt.

### Darstellung der Erfindung

Es ist daher die Aufgabe der vorliegenden Erfindung, ein höheres Abstraktionsniveau zur Anwendungsprogrammierung bei Kontrollsystemen bereitzustellen.

Diese Aufgabe wird erfindungsgemäß gelöst durch die Bereitstellung einer Softwarekomponente gemäß dem unabhängigen Patentanspruch 1, eines Kontrollsystem mit einer Mehrzahl von Softwarekomponenten gemäß dem unabhängigen Patentanspruch 11, der Verwendung von Softwarekomponenten zur Repräsentation von Funktionsknoten gemäß dem unabhängigen Patentanspruch 14, des Verfahrens zum Entwerfen eines Kontrollsystems gemäß dem unabhängigen Patentanspruch 15 sowie des Computerprogrammprodukts gemäß dem unabhängigen Patentanspruch 16.

Weitere vorteilhafte Ausgestaltungen, Details und Aspekte der vorliegenden Erfindung ergeben sich aus den abhängigen Patentansprüchen, der Beschreibung und der beigefügten Zeichnung.

Der Erfindung liegt die Idee zugrunde, die Funktionsknoten der Anwendungseinheiten zu formalisieren und als Softwarekomponenten zu realisieren und damit die Knoten einzukapseln.

Die Erfindung ist daher gerichtet auf eine Softwarekomponente für ein verteiltes Kontrollsystem mit Anwendungseinheiten, welche einen oder mehrere logische Funktionsknoten aufweisen, die jeweils eine einzelne Kontrollfunktion in den Anwendungseinheiten definieren und zum Erreichen einer gewünschten Funktionalität des Kontrollsystems miteinander interagieren oder interagieren können, wobei die Softwarekomponente aufweist:
ein Funktionsmittel zur Implementation eines logischen Funktionsknotens;
ein Verhandlungsmittel zum Empfangen einer Verbindungsanweisung bezüglich einer aufzunehmenden Verbindung mit zumindest einem weiteren Funktionsknoten und zum Vereinbaren möglicher, verwendbarer Verbindungsparameter zwischen dem Funktionsknoten und dem zumindest einen weiteren Funktionsknoten während einer Kompositionsphase des Kontrollsystems; und
ein Verbindungsmittel zum Einstellen der vereinbarten Verbindungsparameter zwischen den Funktionsmitteln und zur Datenübertragung zwischen den verbundenen Funktionsmitteln während einer Laufzeit des Kontrollsystems.

Komponentenbasierte Softwareerstellung ist eine der jüngsten Entwicklungen in der Erstellung großer Softwaresysteme und insbesondere bei der Entwicklung von Anwendungssoftware. Es kann als ein Nachfolger beziehungsweise eine Weiterentwicklung des objektorientierten Paradigmas angesehen werden. Komponentenbasierte Softwareentwicklung basiert auf der Idee, Anwendungen aufzubauen, indem vorfabrizierte Softwarekomponenten in "Black-Box"-Manier zusammengesetzt werden. Eine Softwarekomponente im Sinne der vorliegenden Erfindung ist eine kompositorische Einheit von vertragsmäßig spezifizierten Schnittstellen und ausschließlich expliziten Kontextabhängigkeiten. Eine Softwarekomponente kann unabhängig verbreitet und von Dritten für deren Kompositionen verwendet werden. Man kann sich eine Softwarekomponente als eine statische Abstraktion mit Anschlüssen vorstellen. Anschlüsse beziehen sich auf die einund ausgehenden Schnittstellen. Der statische Aspekt einer Softwarekomponente gestattet es, Komponenten in Verwahrungsorten zu speichern.

Die obige Beschreibung des Begriffs Softwarekomponente soll in der vorliegenden Erfindung verwendet werden. Eine Softwarekomponente besteht also aus einer gekapselten Funktionalität mit definierten Schnittstellen, die als eine Entität aufgefaßt werden kann. Die gegebenen Definitionen stimmen mit deren Anwendung bei bekannten derzeitigen Komponententechnologien wie COM/COM+ der Firma Microsoft oder "Enterprise Java Beans" (EJB) der Firma Sun und deren Realisierung von Softwarekomponenten überein.

Unter einer Anwendungseinheit im Sinne der vorliegenden Erfindung ist jegliche funktionelle Entität zu sehen, die in einem Kontrollsystem Verwendung finden kann. Insbesondere können Anwendungseinheiten intelligente elektronische Geräte sein, die der Schalttechnik dienen und die Schalter, Sensoren, Mikroprozessoren etc. enthalten können. Eine Anwendungseinheit kann auch ein reines Softwareobjekt sein, welches beispielsweise in einer üblichen Datenverarbeitungsanlage abläuft, die zur Gänze oder in einem Teil ihrer Rechenleistung in das Kontrollsystem integriert ist.

Unter einem Kontrollsystem ist ein System von Komponenten wie Anwendungseinheiten zu verstehen, die in ihrem Zusammenspiel Vorgänge kontrollieren können. Vorgänge können Produktion oder Verteilung von Gütern oder Verteilung von Energie, die Kontrolle von Transportsystemen etc. sein.

Ein verteiltes Kontrollsystem ist ein solches, bei dem nicht alle Anwendungseinheiten am selben Ort oder womöglich physikalisch in einem Gehäuse untergebracht sind, sondern das über einen räumlichen Bereich verteilt ist, der eine Kommunikation der Geräte beziehungsweise Anwendungseinheiten über physikalische Schnittstellen notwendig macht.

Der logische Funktionsknoten kann als die kleinstmögliche funktionelle Struktur innerhalb einer Anwendungseinheit aufgefaßt werden. Er entspricht von seinem Konzept her im wesentlichen den Definitionen des Standards IEC 61850, auf den bezüglich der Definition der logischen Knoten hiermit Bezug genommen wird. Der Begriff "logisch" im Zusammenhang mit dem Funktionsknoten bezieht sich darauf, daß der Funktionsknoten keine zusammenhängende physikalische Einheit darstellen muß, sondern lediglich durch den logischen Zusammenhang seiner Bestandteile und seine Funktionalität definiert ist.

Die Softwarekomponente besteht erfindungsgemäß aus drei Untereinheiten, nämlich einem Funktionsmittel, einem Verhandlungsmittel und einem Verbindungsmittel. Hierbei stellt das Funktionsmittel als ein Softwareobjekt die eigentliche Funktionalität (Funktionslogik) des Funktionsknotens bereit. Es implementiert beispielsweise eine notwendige Datenbank und kann die physikalische Verbindung zu Hardwarekomponenten der Anwendungseinheit herstellen, falls ein in der Anwendungseinheit verwendetes Framework dies zuläßt. Andernfalls kann es auf das Framework zugreifen, um die eigentliche Hardware zu kontrollieren. Wenn es sich um eine rein in Software realisierte Anwendungseinheit handelt, kann das Funktionsmittel ein Programmobjekt sein, welches die von der Anwendungseinheit gewünschte Funktionalität, beispielsweise die Anzeige eines von einem Sensor gemessenen Wertes anzeigen kann.

Die Softwarekomponente weist zwei weitere Mittel auf, welche die Entwicklung und den Einsatz von Kontrollsystemen wesentlich vereinfachen. Dies ist zum einen das Verhandlungsmittel, welches in einer Kompositionsphase des Kontrollsystems zum Einsatz kommt und andererseits das Verbindungsmittel, welches während der Laufzeit des Kontrollsystems verwendet wird. Das Verhandlungsmittel stellt die für die Komposition des Kontrollsystems notwendige Funktionalität/Programmlogik zur Verfügung. Über das Verhandlungsmittel wird zum einen die Softwarekomponente davon in Kenntnis gesetzt, daß sie mit zumindest einem weiteren Funktionsknoten eine Verbindung eingehen soll, beispielsweise die Verbindung eines Schalterfunktionsknotens mit einem Schaltrelaisfunktionsknoten. Zum anderen dient das Verhandlungsmittel dazu, herauszufinden, wie eine konkrete Kommunikation zwischen den zu verbindenden Funktionsknoten durchgeführt werden kann. Hierzu werden Sets von Verbindungsparametern definiert, welche bei den miteinander zu verbindenden Funktionsknoten kompatibel sein müssen.

Die Implementierung des Verhandlungsmittels stellt ein zentrales Element der Erfindung dar. Das Verhandlungsmittel übernimmt nämlich die Aufgaben, welche bei konventionellen Programmieransätzen dem Entwickler des Kontrollsystems obliegen und abstrahiert alle Aspekte der eigentlichen Verbindungsaufnahme bis zu dem Grade, daß der Entwickler nur noch seinen Verbindungswunsch eingeben muß und die Verhandlungsmittel der zu verbindenden Softwarekomponenten selbständig die tatsächlich vorzunehmende Konfiguration herausfinden und durch Parameterübergabe an die Verbindungsmittel initiieren. Die Verhandlungsmittel können sich bei dieser Aufgabe ggfs. auf eine Datenbank mit vorgegebenen Informationen über die Softwarekomponente stützen, beispielsweise bezüglich einer Kompatibilitätsgruppe (nur innerhalb derer eine Verbindung von Softwarekomponenten möglich sein soll) oder bezüglich des Formats und Inhalt der zu übertragenden Informationen. Die Verhandlungsmittel können dabei z.B. folgende Kriterien zur Bestimmung einer gültigen Verbindung berücksichtigen:
1. Die Funktionstypenkompatibilität zwischen Quelle und Senke. Eine Quelle ist hierbei ein Funktionsknoten, der Informationen aussendet, eine Senke einer, der sie empfängt. Ein Funktionsknoten kann in einer Verbindung auch beide Aufgaben haben, die jeweils separat betrachtet werden müssen. Unter Funktionstypen sind Einheiten zu verstehen, deren Werte übermittelt werden sollen, beispielsweise die Erfassung einer Temperatur oder die Bereitstellung von Archivierungsfunktionen. Nur solche Funktionsknoten können miteinander kommunizieren, die hierbei Kompatibilität aufweisen. So ist beispielsweise eine Archivierungsfunktion in der Regel kompatibel mit einer Meßsensorsteuerung, die in regelmäßigen Abständen gemessene Werte überträgt, wäre aber beispielsweise inkompatibel mit einer Funktion zur Ansteuerung von Bandlaufwerken
2. Die Datentypkompatibilität zwischen Quelle und Senke. Hierunter sind informationelle Datentypen zu verstehen, wie "integer" oder "floating point", aber auch physikalische wie V resp. kV. Ein Funktionsknoten, der Berechnungen in kV durchführt, kann nicht von einer Quelle gespeist werden, welche ihre Spannungswerte in V exportiert. Eine Aufgabe des Verhandlungsmittels kann allerdings auch sein, beispielsweise die Quelle so zu konfigurieren, daß die Spannungsangaben in einem für die Senke lesbaren Format erfolgt, sofern die Quelle entsprechend konfigurierbar ist.
3. Die Verfügbarkeit von Kommunikationsresourcen auf dem Pfad zwischen Quelle und Senke. Auch hier muß eine Kompatibilität gewährleistet sein, beispielsweise bezüglich zur Verfügung stehenden "Shared Memories" oder von geeigneten Netzwerkstrecken wie LAN (local area network) oder Telephonleitungen. Beide zu verbindenden Funktionsknoten müssen in der Lage sein, auf geeignete, übereinstimmende Kommunikationsresourcen zugreifen zu können.
4. Die Berücksichtigung von Systemqualitäten, insofern spezifiziert. Hierzu zählen beispielsweise die Verfügbarkeit eines Geräts (seine Zuverlässigkeit, z.B. in Prozent), erlaubte Antwortzeiten bei Anfragen, die pro Zeiteinheit verarbeitbare Datenmenge etc. Auch hinsichtlich dieser Faktoren kann eine Komposition von Funktionsknoten auf Gültigkeit überprüft werden.

Weitere Kriterien für die Kompatibilität bzw. Anpassung von Funktionsknoten können hinzutreten, so daß die oben angegebenen Kategorien nicht als limitierend, sondern als beispielhaft anzusehen sind.

Vorzugsweise weist das Verhandlungsmittel eine Kompositionsschnittstelle zur Kommunikation mit einem Kontrollsystem-Kompositionswerkzeug zum Empfangen der Verbindungsinformation und eine Systemschnittstelle zur Kommunikation mit anderen Softwarekomponenten während des Vereinbarens auf. Die Kompositionsschnittstelle dient somit der Informationsübermittlung von einem Kontrollsystem-Kompositionswerkzeug. Ein solches Kompositionswerkzeug, das auch als "Builder" bezeichnet wird, stellt den kommunikativen Rahmen dar, in dem sich die Verhandlungsmittel der unterschiedlichen Softwarekomponenten des zu erstellenden Kontrollsystems bewegen können. Das Kompositionswerkzeug kann gänzlich unterschiedlich gestaltet sein. So ist es vorstellbar, ein Kompositionswerkzeug zu verwenden, welches ein einfaches Kommandozeilenprogramm ist, in das die Bezeichner der zu verbindenden Softwarekomponenten weitere Rahmenbedingungen der Verbindung über ein Textterminal eingegeben werden können. Ein Kompositionswerkzeug kann allerdings auch ein hochkomplexes graphisches Instrument sein, welches es erlaubt, mittels moderner Benutzerelemente wie einer Maus oder von Spracheingabe die zu verbindenden Softwarekomponenten unmittelbar am Bildschirm graphisch zwei- oder dreidimensional zu manipulieren.

Des weiteren weist das Verhandlungsmittel vorzugsweise eine Systemschnittstelle auf. Diese dient der unmittelbaren Kommunikation zwischen den verschiedenen Softwarekomponenten. Ein Verhandlungsmittel, welches beispielsweise über die Kompositionsschnittstelle darüber informiert worden ist, daß es mit einem bestimmten anderen Funktionsknoten, respektive dessen Softwarekomponenten, in Verbindung treten soll, kann diesen Funktionsknoten über dessen Systemschnittstelle ansprechen und während des Vereinbarungsvorganges herausfinden, ob eine Kommunikation zwischen den beiden oder mehreren Softwarekomponenten möglich ist. In diesem Zusammenhang ist es auch möglich, die Kompositionsschnittstelle zum Senden einer Verbindungsinformation von der Softwarekomponente zum Kompositionswerkzeug zu verwenden, beispielsweise um diesem mitzuteilen, daß eine Verbindung zustande gekommen ist oder daß diese Verbindung aus Inkompatibilitätsgründen nicht möglich ist.

Ein weiteres Element der erfindungsgemäßen Softwarekomponente ist das Verbindungsmittel. Dieses übernimmt die Aufgabe der eigentlichen Kommunikation der unterschiedlichen Funktionsknoten, respektive der Softwarekomponenten miteinander. Zu diesem Zweck wird eine Kommunikation etabliert, indem die Verbindungsparameter gemäß den vereinbarten Vorgaben eingestellt werden, um die Kommunikation mit diesen Verbindungsparametern durchzuführen, zum anderen übernimmt das Verbindungsmittel die eigentliche Datenübertragung zwischen den verbundenen Funktionsknoten.

Das Verbindungsmittel kann dadurch gekennzeichnet sein, daß es eine Laufzeitschnittstelle aufweist, die der Datenübertragung zwischen den verbundenen Funktionsknoten dient. Diese soll vorliegend als Laufzeitschnittstelle bezeichnet werden, da sie erst während einer Laufzeit der Softwarekomponente, nicht hingegen bei der Komposition des Kontrollsystems verwendet wird.

Die erfindungsgemäße Softwarekomponente ist eine Entität, welcher eine kombinierte Funktionalität zur Verfügung steht, mit der ein Kontrollsystem sowohl komponiert als auch betrieben werden kann. Jede Softwarekomponente enthält die notwendigen Mittel, um mit ihr eine Komposition eines Kontrollsystems durchführen zu können, da sie einerseits mit einem Kompositionswerkzeug interagieren kann und autarke Entscheidungen über mögliche Kommunikationen mit anderen Softwarekomponenten durchführen kann, andererseits jedoch auch zur Laufzeit die eigentliche Verbindung zwischen den Funktionsknoten herstellen kann.

Eine weitere Möglichkeit der Erweiterung der erfindungsgemäßen Softwarekomponente stellt die Integration eines Repräsentationsmittels zur Darstellung des durch die Softwarekomponente implementierten Funktionsknotens in einem Kontrollsystem-Kompositionswerkzeug dar. Das Repräsentationsmittel kann als Bestandteil des Verbindungsmittels ausgeführt oder eine eigenständige Einheit sein. Das Repräsentationsmittel stellt hierbei eine Funktionalität zur Verfügung, die es dem Kompositionswerkzeug gestattet, auf einem Bildschirm eine graphische Repräsentation des Funktionsknotens bereitzustellen. Dies kann beispielsweise ein Programmobjekt sein, welches in der Lage ist, ein Symbol oder eine Datenliste auf einem Bildschirm darzustellen, welche den Funktionsknoten repräsentiert. So können beispielsweise übliche Schaltzeichen, beispielsweise das Symbol für ein Ventil im Falle von Flüssigkeitssteuerungskontrollsystemen, verwendet werden, um die einzelnen Funktionsknoten darzustellen. Zusätzliche Informationen wie Typbezeichner oder konkrete Fähigkeiten des Funktionsknotens können hinzutreten. Es ist darüber hinaus ebenfalls möglich, daß Repräsentationsmittel so auszulegen, daß es neben der eigentlichen Darstellung des Funktionsknotens auch die Darstellung eines aktuellen Zustands des Funktionsknotens vornehmen kann. Hierzu muß das Repräsentationsmittel Zugriff auf eine Information über den Funktionsknoten erhalten, beispielsweise durch Abfrage einer Datenbank mit solchen Informationen oder durch Interaktion mit dem Funktionsmittel. Eine solche Ausführungsform kann dann besonders interessant sein, wenn entweder das Kompositionswerkzeug ebenfalls eine Laufzeitdarstellung aufweist, so daß es nicht nur zur Komposition, sondern auch zur Überwachung des erstellten Kontrollsystems verwendet werden kann, oder wenn ein eigenständiges Überwachungssystem zur Laufzeit des Kontrollsystems vorgesehen wird, daß in der Lage ist, mit denselben Softwarekomponenten bzw. den identischen Schnittstellen dieser Softwarekomponenten zu arbeiten wie das Kompositionswerkzeug.

Bislang ist die logische Struktur der Softwarekomponente gemäß der vorliegenden Erfindung eingeführt worden. Es ist jedoch bislang nicht darauf eingegangen worden, wie der Zusammenhang zwischen der logischen Struktur und einer physikalischen Implementierung aussehen kann.

Für die tatsächliche Implementierung einer Softwarekomponente stehen dem Fachmann zahlreiche Möglichkeiten zur Verfügung. So können alle Elemente der Softwarekomponente, also Funktionsmittel, Verhandlungsmittel und Verbindungsmittel, gemeinsam in einem intelligenten elektronischen Gerät untergebracht sein, das mittels eines Mikroprozessors die Softwarekomponente ausführen kann. Die Kommunikation mit dem Kompositionswerkzeug und der Softwarekomponenten untereinander kann dann über physikalische Schnittstellen zwischen den verschiedenen Anwendungseinheiten erfolgen oder, sofern die miteinander verbundenen Softwarekomponenten in derselben Anwendungseinheit untergebracht sind, über logische Schnittstellen innerhalb des Geräts erfolgen.

Es ist jedoch auch möglich, daß die Softwarekomponenten als solche bereits verteilt sind, ohne daß das dem Konzept der Softwarekomponente, eine geschlossene Entität darzustellen, entgegenstehen würde. So kann beispielsweise die Softwarekomponente ein verteiltes System sein, bei dem Funktionsmittel und Verbindungsmittel vom Verhandlungsmittel getrennt ist. Funktionsmittel und Verbindungsmittel können beispielsweise in einem intelligenten elektronischen Gerät untergebracht sein, während das Verhandlungsmittel beispielsweise auf einem Datenverarbeitungsgerät läuft, auf dem auch das Kompositionswerkzeug läuft.

Die verschiedenen Softwarekomponenten können dadurch miteinander interagieren, daß beispielsweise die Laufzeitschnittstelle einer Softwarekomponente über eine Netzwerkstruktur mit Laufzeitschnittstellen anderer Softwarekomponenten verbindbar ist. Eine solche Netzwerkstruktur kann beispielsweise ein Datenbus oder ein herkömmliches Datenverarbeitungsnetzwerk wie Ethernet oder Token-Ring sein, an das die verschiedenen Anwendungseinheiten beziehungsweise Datenverarbeitungsgeräte, auf denen Softwareanwendungseinheiten ablauffähig sind, angeschlossen sind.

Eine weitere Notwendigkeit bei der Realisierung der erfindungsgemäßen Softwarekomponente ist, daß das Verbindungsmittel Kenntnis davon erhalten kann, welche Verbindungsparameter das Verhandlungsmittel vereinbart hat. Dies kann beispielsweise durch eine Datenbank geschehen, auf die beide Mittel zugreifen können. Es wird jedoch insbesondere bei verteilten Softwarekomponenten, bei denen also nicht alle erfindungsgemäßen Mittel auf demselben physikalischen Gerät untergebracht sind, bevorzugt, daß die Softwarekomponente einen Kommunikationskanal zwischen Verbindungsmittel und Verhandlungsmittel zur Übertragung der vom Verhandlungsmittel vereinbarten Verbindungsparameter an das Verbindungsmittel aufweist. Die tatsächliche Realisierung eines solchen Kommunikationskanals hänge von den konkreten Ausgestaltungen der Softwarekomponente ab und ist dem Fachmann geläufig.

Die Definition der erfindungsgemäß verwendeten Funktionsknoten ist nicht an eine bestimmte Implementierung gebunden. Vielmehr kommt es bei der Erfindung darauf an, daß die Definition der Funktionsknoten eine geeignete Gliederung der Gesamtfunktionalität des Kontrollsystems, beziehungsweise seiner einzelnen Anwendungseinheiten, ermöglicht, um so eine möglichst flexible und vielfältige Komposition eines Kontrollsystems zu gestatten. Um jedoch die Standardisierung von Funktionsknoten möglichst weitgehend zu gewährleisten und den Aufwand bei der Definition der zu verwendenden Funktionsknoten zu minimieren, wird es insbesondere bevorzugt, daß die Funktionsknoten logische Knoten im Sinne der Norm IEC 61850 sind.

Das Funktionsmittel kann des weiteren eine Datenbank zur Speicherung von Parametern über den Funktionsknoten und/oder über mögliche Verbindungen aufweisen. Diese Datenbank, die beispielsweise in Form einer Textdatei oder einer XML-Datei erstellt sein kann, ermöglicht es dem Funktionsmittel also einerseits, seinen aktuellen Zustand sowie mögliche Zustandsänderungen zu kommunizieren, andererseits jedoch auch, Informationen darüber zu speichern, welche festlegen können, mit welchen anderen Funktionsknoten das Funktionsmittel in Verbindung treten kann. Typische Einträge in der Datenbank wären beispielsweise der Schaltzustand eines Schalters, der vom Funktionsmittel implementiert wird oder die aktuell von einem durch das Funktionsmittel repräsentierten Sensor gemessene Temperatur.

Die Erfindung ist weiterhin gerichtet auf ein Kontrollsystem mit einer Mehrzahl der erfindungsgemäßen Softwarekomponenten, einem Kontrollsystem-Kompositionswerkzeug zur Verknüpfung von Verhandlungsmitteln der Softwarekomponenten und einem Kommunikationssystem zur Verknüpfung der Verbindungsmittel der Softwarekomponenten während einer Laufzeit. Das Kommunikationssystem zur Verknüpfung der Verbindungsmittel kann ein Netzwerk oder ein Datenbus sein, es kann sich jedoch auch um eine logische Verknüpfung handeln, wenn die beiden oder mehrere miteinander kommunizierende Softwarekomponenten auf derselben Anwendungseinheit, beziehungsweise in derselben Datenverarbeitungsanlage, welche zu einem ihrer Teile eine Anwendungseinheit darstellt, residieren. Ein solches oder vergleichbares Kommunikationssystem kann auch notwendig sein, um die Verhandlungsmittel untereinander oder mit dem Kompositionswerkzeug zu verbinden. Dies gilt insbesondere dann, wenn die Verhandlungsmittel mit den Verbindungsmitteln zusammengefaßt auf den Anwendungseinheiten liegen und somit hinsichtlich der Verhandlungskomponenten und des Kompositionswerkzeugs bereits ein verteiltes System vorliegt.

Die Erfindung ist weiterhin gerichtet auf die Verwendung von Softwarekomponenten zur Repräsentation von Funktionsknoten von Anwendungseinheiten eines Kontrollsystems, wobei die Funktionsknoten jeweils eine einzelne Kontrollsystemfunktion in den Anwendungseinheiten definieren und zum Erreichen einer gewünschten Funktionalität des Kontrollsystems miteinander interagieren oder interagieren können.

Eine Verwendung von Softwarekomponenten auf diesem Bereich der Datenverarbeitung ist bislang nicht bekannt gewesen.

Die Erfindung ist weiterhin gerichtet auf ein Verfahren zum Entwerfen eines Kontrollsystems mit den folgenden Schritten:
- Verknüpfen der Verhandlungsmittel von zumindest zwei erfindungsgemäßen Softwarekomponenten, deren Funktionsmittel miteinander interagieren sollen in einem Kontrollsystem-Kompositionswerkzeug;
- Feststellen der Kompatibilität der zumindest zwei Funktionsmittel, die miteinander interagieren sollen, durch die verknüpften Verhandlungsmittel;
- Vereinbaren verwendbarer Verbindungsparameter zur Datenübertragung zwischen den Funktionsmitteln durch die verknüpften Verhandlungsmittel;
- Übergeben der Verbindungsparameterinformation an das Verbindungsmittel; und
- Verknüpfen der Verbindungsmittel an Hand der Verbindungsparameterinformationen.

Bezüglich der Vorteile und weiteren Aspekte des erfindungsgemäßen Verfahrens wird auch auf die Schilderung der erfindungsgemäßen Softwarekomponente verwiesen und auf diese vollinhaltlich Bezug genommen, da dort bereits viele Aspekte dieses erfindungsgemäßen Verfahrens dargestellt wurden. Die verschiedenen erfindungsgemäßen Schritte führen zu einem Kontrollsystem, das nach den Vorstellungen des Kompositeurs (Programmierers) zusammengesetzt und betriebsfähig ist, da die Verbindungsmittel beim Abschluß der erfindungsgemäßen Verfahrens bereits eine Verbindung eingegangen sind.

Das Feststellen der Kompatibilität und das Vereinbaren von Verbindungsparametern, wobei die beiden Schritte auch zusammengefasst werden können bzw. als ein Schritt aufgefasst werden können, wenn z.B. das Testen der Kompatibilität implizit durch Erfolg oder Scheitern des Vereinbaren von Verbindungsparametern erfolgen kann, ist der komplizierteste Teil des Verfahrens, da, wie oben bezüglich der Beschreibung der erfindungsgemäßen Softwarekomponente ausgeführt, in der hier implementierten Funktionalität alle möglichen Fälle einer vom Programmierer gewünschten Verknüpfung von Funktionsknoten berücksichtigt werden müssen.

Das Übergeben der Verbindungsparameterinformationen kann direkt über einen Kommunikationskanal oder indirekt über Ablegen der Informationen an einem Ort (Datenbank, Speicherbereich), auf den auch vom Verbindungsmittel aus zugegriffen werden kann, erfolgen.

Das Verfahren kann vorzugsweise dadurch gekennzeichnet sein, daß das Verknüpfen der Verhandlungsmittel mittels einer graphischen Benutzeroberfläche geschieht, welche Repräsentationen der Funktionsknoten und zwischen ihnen hergestellte Verknüpfungen darstellen kann. Dies ermöglicht in besonders einfacher Weise mit Hilfe graphischer Hilfsmittel, die Komposition des Kontrollsystems in einer Datenverarbeitungsanlage durchzuführen.

Die Erfindung ist schließlich auch auf ein Computerprogrammprodukt gerichtet, welches in einen internen Speicher eines digitalen Datenverarbeitungsmittels ladbar ist, und Computerprogrammcodemittel aufweist, die, wenn sie in einem oder mehreren Datenverarbeitungsmitteln geladen und ausgeführt werden, das Verfahren gemäss der Erfindung ausführen. Das Computerprogrammprodukt beschreibt respektive implementiert also die Softwarekomponente gemäss der Erfindung. Das Computerprogrammprodukt weist vorzugsweise ein computerlesbares Medium mit einem darauf gespeicherten Computerprogramm zur Ausführung des Verfahrens gemäss der Erfindung auf.

Die erfindungsgemäße Softwarekomponente sowie das erfindungsgemäße Gesamtkontrollsystem und das Verfahren weisen eine Reihe von Vorteilen auf, welche eine herstellerunabhängige Implementation von Kontrollsystemen verbessert. So wird die Kontrollsystemfunktionalität in wohl definierte Stücke zerlegt. Softwarekompositionsabstraktionen können diese Dekomposition unterstützen. Eine Korrelierung der erfindungsgemäßen Funktionsknoten mit logischen Knoten der IEC 61850 würde eine Verbindung des verwendeten Modells mit wichtigen informationstechnologischen Standards und Technologien gewährleisten.

Anwendungsentwicklung und kundenspezifische Anpassung können auf dem Abstraktionsniveau dieser Softwarekomponenten erreicht werden, so daß die mühsame Programmierung auf niedrigerem Abstraktionslevel, wie sie im Stand der Technik bekannt war, nicht mehr notwendig ist. Die Verfügbarkeit eines graphischen Kompositionsmodells in bestimmten Ausführungsformen vereinfacht zudem die Komposition von Kontrollsystemen weiter. Auch die graphische Komposition ist praktisch nur möglich durch die Abstraktion auf dem Niveau einer Softwarekomponente. Diese ermöglicht flexible, modulare Erweiterung von Kontrollsystemen, ohne daß auf eine graphische Repräsentation verzichtet werden müßte.

### Kurze Beschreibung der Zeichnung

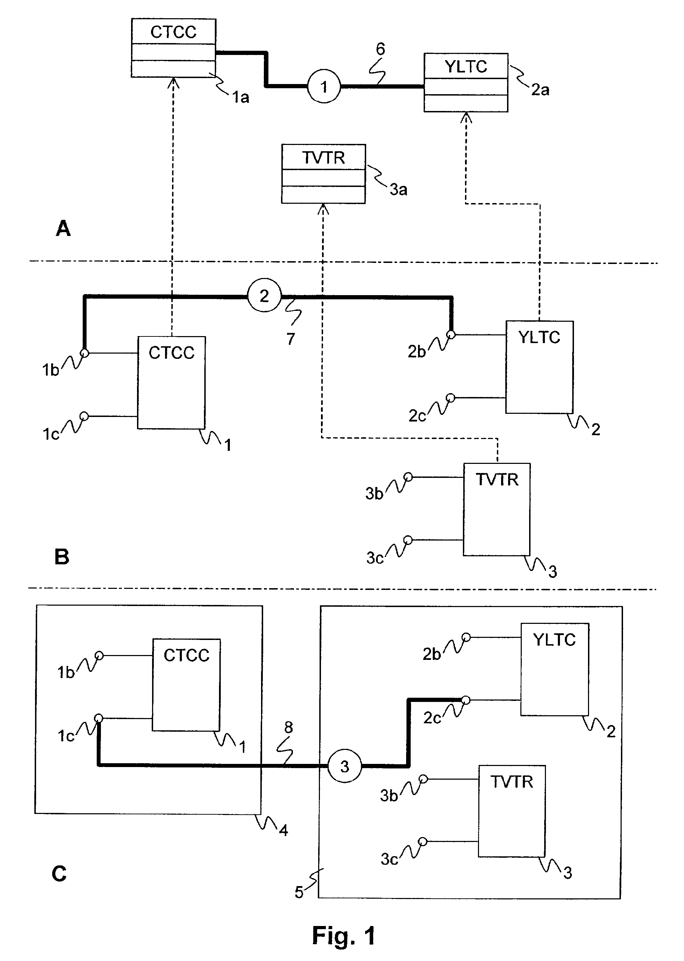

Figur 1 zeigt die Komposition eines Kontrollsystems durch Verknüpfung seiner Komponenten mittels eines Kompositionswerkzeugs.

### Wege zur Ausführung der Erfindung

Wie oben erläutert, soll die funktionelle Dekomposition der Gesamtfunktionalität in Funktionsknoten, beispielsweise wie sie im Standard IEC 61850 durchgeführt worden ist, als Basis für die Definition von atomaren Einheiten dienen, auf deren Grundlage Kontrollsystemanwendungen assembliert werden können. Das verwendete Objektmodell und das Konzept der Funktionsknoten soll hierbei auf Softwarekomponenten abgebildet werden. Das Konzept der Funktionsknoten, beispielsweise der logischen Knoten aus der IEC 61850, soll verwendet werden, um die folgenden Schlüsseleigenschaften des Softwarekomponentenframework zu definieren:
- ein kontrollsystemspezifisches Komponententypsystem;
- die Funktionalität der Komponentenlaufzeitschnittstellen; und
- die bereitgestellten und benötigten Quality of Service Standards (beispielsweise durch die Verwendung des Picom-Konzepts aus der IEC 61850).

Eine Softwarekomponente zur Abbildung eines Funktionsknotens kapselt das funktionelle Verhalten und die unterstützten Datenarten in diesem Funktionsknoten. Die erfindungsgemäße Softwarekomponente unterstützt zwei verschiedene Verhaltensweisen, nämlich zum einen ein Kompositionszeitverhalten und zum anderen ein Laufzeitverhalten. Vorzugsweise vorhandene Kompositionszeitschnittstellen wie die Kompositionsschnittstelle oder die Systemschnittstelle unterstützen die Anwendungskomposition und die Komponentenkonfiguration, während die Laufzeitschnittstellen die Komponenteninteraktion auf der Zielhardware während der Laufzeit des Kontrollsystems realisieren.

Figur 1 zeigt das Prinzip der erfindungsgemäßen Softwarekomponente und der Erstellung von Kontrollsystemen mittels der erfindungsgemäßen Softwarekomponenten in schematischer Weise. Figur 1 zeigt drei Softwarekomponenten 1, 2 und 3, welche verschiedene Funktionsknoten des zu erstellenden Kontrollsystems implementieren. Hierbei ist die Softwarekomponente oder zumindest ihr Verbindungsmittel in einer Anwendungseinheit 4 realisiert, während die beiden Softwarekomponenten 2 und 3 in einer weiteren Anwendungseinheit 5 untergebracht sind. Die Softwarekomponenten tragen zur Illustration Bezeichnungen, welche den Definitionen der IEC61850 entsprechen. Die Softwarekomponente CTCC steht hierbei für eine Abzweig-Steuerung, die Komponente YLTC für einen Stufenschalter und die Komponente mit der Bezeichnung TVTR implementiert in der IEC 61850 einen Spannungswandler. In der Figur 1 sind drei unterschiedliche Level der Interaktion der Softwarekomponenten dargestellt. Das oberste Level, durch eine strichlierte Linie abgetrennt, zeigt ein Anwenderlevel A, innerhalb dessen der Anwender graphische Manipulationen mit den Softwarekomponenten durchführen kann. Das mittlere Level ist ein Komponentenlevel B während der Kompositionszeit. Während das im unteren Bereich der Figur 1 dargestellte Level ein Komponentenlevel C während der Laufzeit des Kontrollsystems darstellt. Die graphischen Repräsentationen 1a, 1b, 1c können beispielsweise innerhalb eines Fensters oder auf einem Bildschirm des Kompositionswerkzeugs dargestellt werden. Ihre Darstellung wird realisiert durch die Softwarekomponenten 1, 2, 3, was durch die gestrichelten Pfeile, die vom Komponentenlevel B auf das Anwenderlevel A reichen, symbolisiert werden soll. Jede Softwarekomponente weist zumindest eine Schnittstelle 1b, 2b, 3b auf, welche als Systemschnittstellen der Kommunikation der Verhandlungsmittel der einzelnen Softwarekomponenten untereinander dienen. Die Softwarekomponenten 1, 2, 3 weisen des weiteren Laufzeitschnittstellen 1c, 2c, 3c auf, welche die eigentlichen Verbindungen während der Laufzeit herstellen und die Kommunikation der Softwarekomponenten während der Laufzeit übernehmen.

Im folgenden soll beispielhaft die Erstellung einer Verknüpfung zwischen zwei Softwarekomponenten an Hand der Darstellung der Figur 1 beschrieben werden. Das Aufbauen einer kundenspezifischen Leittechnik-Anwendung wird durch Manipulation der graphischen Repräsentationen 1a, 2a, 3a der Softwarekomponenten auf dem Anwenderlevel A erzielt, beispielsweise durch Verbinden von Komponenten mittels eines Zeichenwerkzeugs des Kontrollsystem-Kompositionswerkzeugs. In Fig. 1 ist dies durch die dicke Linie 6 als Schritt (1) verdeutlicht. Diese Linie wird innerhalb der Bildschirmdarstellung des Kompositionswerkzeugs mit dargestellt. Auf diese Weise braucht der Entwickler lediglich seine ihm wohl bekannten Funktionsknoten, beispielsweise logische Knoten gemäß dem Standard IEC 61850, zu manipulieren. Die Möglichkeiten der graphischen Manipulation werden definiert, vorgegeben und unterstützt durch die Systemschnittstellen 1b, 2b, 3b, wie es der Semantik des Verbindens dieser typisierten Komponenten entspricht. Der Effekt der visuellen Manipulation auf dem Anwenderlevel A ist die Aufnahme von Verhandlungen zwischen den beiden zu verbindenden Komponenten über die Systemschnittstellen 1b und 2b, wie auf dem Komponentenlevel B durch die Linie 7 als Schritt (2) dargestellt ist. Die Verhandlungsmittel beeinflussen das gewünschte Laufzeit-Verhalten der Komponenten, so daß die Laufzeit-Schnittstellen 1c, 2c automatisch konfigurierbar sind, wie in Fig. 1 durch die Linie 8 (Schritt (3)) verdeutlicht wird.

Wie kompliziert auch immer die tatsächliche Verbindung zwischen den beiden Funktionsknoten sein mag (was durch die Verteilung und damit Lokalisation der Funktionsknoten auf den Anwendungseinheiten und die eigentliche Anwendungseinheitenkommunikation bedingt ist), so wird diese Komplexität vor dem Anwendungsprogrammierer verborgen, der sich damit auf die Strukturierung des Kontrollsystems und damit das Erreichen der projektierten Funktionalität konzentrieren kann. Der erfindungsgemäße Ansatz zur Entwicklung von Kontrollsystems ist daher a) generisch und einheitlich; b) auf einem hohen Abstraktionsniveau und c) anwendbar auf alle Systeme, welche eine Datenkommunikation zwischen Funktionsknoten mittels verschiedener Mittel wie verteilter Datenbanken oder direkter "remote procedure calls" verwenden.

### Bezugszeichenliste

- 1, 2, 3: Softwarekomponenten (SK)
- 1a, 2a, 3a: Repräsentationsmittel der SK
- 1b, 2b, 3b: Systemschnittstellen der SK
- 1c, 2c, 3c: Laufzeitschnittstellen der SK
- 4: 1. Anwendungseinheit
- 5: 2. Anwendungseinheit
- 6: Verbindung zwischen SK im Kompositionswerkzeug
- 7: Verbindung von zwei Systemschnittstellen bei der Komposition
- 8: Verbindung von zwei Laufzeitschnittstellen während der Laufzeit

## Patentansprüche

1. Softwarekomponente (1, 2, 3) für ein verteiltes Kontrollsystem mit Anwendungseinheiten (4, 5), welche einen oder mehrere logischen Funktionsknoten aufweisen, die jeweils eine einzelne Kontrollsystem-Funktion in den Anwendungseinheiten definieren und zum Erreichen einer gewünschten Funktionalität des Kontrollsystems miteinander interagieren oder interagieren können; mit:
einem Funktionsmittel zur Implementation eines logischen Funktionsknotens;
einem Verhandlungsmittel zum Empfangen einer Verbindungsanweisung bezüglich einer aufzunehmenden Verbindung mit zumindest einem weiteren Funktionsknoten und zum Vereinbaren möglicher, verwendbarer Verbindungsparameter zwischen dem Funktionsknoten und dem zumindest einen weiteren Funktionsknoten während einer Kompositionsphase des Kontrollsystems; und
einem Verbindungsmittel zum Einstellen der vereinbarten Verbindungsparameter zwischen den Funktionsmitteln und zur Datenübertragung zwischen den verbundenen Funktionsmitteln während einer Laufzeit des Kontrollsystems.

2. Softwarekomponente nach Anspruch 1, **dadurch gekennzeichnet, daß** das Verhandlungsmittel aufweist eine Kompositionsschnittstelle zur Kommunikation mit einem Kontrollsystem-Kompositionswerkzeug zum Empfangen der Verbindungsinformation; und
eine Systemschnittstelle (1b, 2b, 3b) zur Kommunikation mit anderen Softwarekomponenten während des Vereinbarens.

3. Softwarekomponente nach Anspruch 1 oder 2, **dadurch gekennzeichnet, daß** das Verbindungsmittel aufweist eine Laufzeit-Schnittstelle (1c, 2c, 3c) für die Datenübertragung zwischen den verbundenen Funktionsknoten.

4. Softwarekomponente (1, 2, 3) nach Anspruch 3, **dadurch gekennzeichnet, daß** die Laufzeitschnittstelle (1c, 2c, 3c) über eine Netzwerkstruktur mit Laufzeitschnittstellen (1c, 2c, 3c) anderer Softwarekomponenten (1, 2, 3) verbindbar ist.

5. Softwarekomponente (1, 2, 3) nach einem der Ansprüche 1 bis 4, **dadurch gekennzeichnet, daß** sie weiterhin aufweist ein Präsentationsmittel zur Darstellung des durch sie implementierten Funktionsknotens in einem Kontrollsystem-Kompositionswerkzeug.

6. Softwarekomponente (1, 2, 3) nach einem der Ansprüche 1 bis 5, **dadurch gekennzeichnet, daß** sie einen Kommunikationskanal zwischen Verbindungsmittel und Verhandlungsmittel zur Übertragung der vom Verhandlungsmittel vereinbarten Verbindungsparameter an das Verbindungsmittel aufweist.

7. Softwarekomponente (1, 2, 3) nach einem der Ansprüche 1 bis 6, **dadurch gekennzeichnet, daß** sie ein verteiltes System ist, bei dem Funktionsmittel und Verbindungsmittel vom Verhandlungsmittel und dem Präsentationsmittel getrennt sind.

8. Softwarekomponente (1, 2, 3) nach einem der Ansprüche 1 bis 7, **dadurch gekennzeichnet, daß** die Funktionsknoten logische Knoten im Sinne der Norm IEC61850 sind.

9. Softwarekomponente (1, 2, 3) nach einem der Ansprüche 1 bis 8, **dadurch gekennzeichnet, daß** das Funktionsmittel eine Datenbank zur Speicherung von Parametern über den Funktionsknoten und/oder über mögliche Verbindungen aufweist.

10. Kontrollsystem
mit einer Mehrzahl von Softwarekomponenten (1, 2, 3) nach einem der Ansprüche 1 bis 9;
einem Kontrollsystem-Kompositionswerkzeug zur Verknüpfung von Verhandlungsmitteln der Softwarekomponenten (1, 2, 3); und
einem Kommunikationssystem zur Verknüpfung der Verbindungsmittel der Softwarekomponenten (1, 2, 3) während einer Laufzeit.

11. Kontrollsystem nach Anspruch 10, **dadurch gekennzeichnet, daß** das Kommunikationssystem ein Netzwerk oder ein Bussystem ist, das mit allen Softwarekomponenten (1, 2, 3) verbindbar ist.

12. Kontrollsystem nach Anspruch 10 oder 11, **dadurch gekennzeichnet, daß** es ein Verhandlungskommunikationssystem aufweist, über das die Verhandlungsmittel und das Kontrollsystem-Kompositionswerkzeug miteinander kommunizieren können.

13. Verwendung von Software-Komponenten (1, 2, 3) zur Repräsentation von Funktionsknoten von Anwendungseinheiten eines Kontrollsystems, wobei die Funktionsknoten jeweils eine einzelne Kontrollsystem-Funktion in den Anwendungseinheiten definieren und zum Erreichen einer gewünschten Funktionalität des Kontrollsystems miteinander interagieren oder interagieren können.

14. Verfahren zum Entwerfen eines Kontrollsystems mit folgenden Schritten:
- Verknüpfen der Verhandlungsmittel von zumindest zwei Softwarekomponenten (1, 2, 3) gemäß einem der Ansprüche 1 bis 9, deren Funktionsmittel miteinander interagieren sollen; in einem Kontrollsystem-Kompositionswerkzeug;
- Feststellen der Kompatibilität der zumindest zwei Funktionsmittel, die miteinander interagieren sollen, durch die verknüpften Verhandlungsmittel;
- Vereinbaren verwendbarer Verbindungsparameter zur Datenübertragung zwischen den Funktionsmitteln durch die verknüpften Verhandlungsmittel;
- Übergeben der Verbindungsparameterinformation an die Verbindungsmittel; und
- Verknüpfen der Verbindungsmittel anhand der Verbindungsparameterinformationen.

15. Verfahren nach Anspruch 14, **dadurch gekennzeichnet, daß** das Verknüpfen mit einer graphischen Benutzeroberfläche geschieht, welche Repräsentationen der Funktionsknoten und die zwischen Ihnen hergestellten Verknüpfungen darstellen kann.

16. Computerprogrammprodukt, welches in einen internen Speicher eines digitalen Datenverarbeitungsmittels ladbar ist, und Computerprogrammcodemittel aufweist, die, wenn sie in einem oder mehreren Datenverarbeitungsmitteln geladen und ausgeführt werden, das Verfahren gemäss Anspruch 14 oder 15 ausführen.
